# EUROPEAN PATENT APPLICATION

(11) **EP 3 804 976 A1**
(43) Date of publication of application: **14.04.2021**
(21) Application number: 19201850.5
(22) Date of filing: 08.10.2019
(51) Int. Cl.: B32B 3/12, B32B 1/00, B32B 5/02, B32B 7/12, B32B 15/082, B32B 15/09, B32B 15/14, B32B 15/20, B32B 27/12, B32B 27/30, B32B 27/32, F16L 59/02

(54) **MULTILAYER LAMINATE FOR HEAT SHIELDING APPLICATIONS**

(71) Applicant: NITTO BELGIUM N.V, 3600 Genk (BE)
(72) Inventor: PARLOO, Eli, 3600 Genk (BE); MUFFELS, Peter, 3600 Genk (BE)
(74) Representative: Grünecker Patent- und Rechtsanwälte PartG mbB

(57) **Abstract**

A multilayer laminate for heat shielding applications is provided, the laminate comprising in the following order: a heat reflective layer comprising a metal or a metallic alloy; a first insulating layer composed of a material selected from a polymer-based foam, glass fibers, mineral fibers, synthetic non-woven fabric, natural non-woven fabric and combinations thereof; and a second insulating layer comprising a cellular structure. The laminate simultaneously exhibits excellent heat shielding and sound damping properties and favourable corrosion resistance, while still being light-weight and conformable to complex curved shapes, and may be produced in a simple and inexpensive manner. In addition, methods of manufacturing the multilayer laminates and exemplary uses thereof are described.

## Description

### FIELD OF INVENTION

The present invention relates to laminates comprising multiple insulating layers, which may be used as heat shields, e.g., in the automotive sector. In addition, methods of their manufacture and exemplary uses are described.

### BACKGROUND OF THE INVENTION

Heat shields and heat insulating panels have been widely employed in marine, aerospace, aircraft, building, construction or white good applications, for example, to protect temperature-sensitive components or assemblies from direct impact of heat generated in spatial proximity and to minimize the fire hazard.

For effective use in the automotive sector (e.g. in the tank systems, chassis/underbody paneling, bumpers, HVAC assemblies, exhaust systems and components in the engine departments of vehicles), such heat shields typically have to meet a number of requirements. For example, the heat shield should be able to reflect heat, lead off heat to the side, provide insulation against thermal transfer, and preferably also exhibit sound absorption and/or vibration damping properties. In addition, suitable heat shield materials should be light-weight, shapeable in 3D to adapt to the often complex contours of the vehicle parts to be insulated and exhibit a high resistance to corrosion upon direct contact with moisture, salt (e.g. road salt) or other corrosion-promoting substances.

Due to limited space in the engine compartments, the development of effective heat shields for hybrid electric vehicles (HEV) is particularly challenging. In addition, many HEV fuel tanks employ stainless steel materials in addition to/or instead of plastics, particularly for safety reasons.

In the recent decades, a number of composites and multilayer laminates have been proposed as heat shields. For example US 4,996,095 A discloses heat shielding composites comprising a fiberglass mat between two aluminum foils having different thicknesses. DE 4137706 A1 discloses sound-absorbing heat shields comprising an insulation layer comprising silica-filled cavities between aluminum foils. However, the thermal insulation properties of said multilayer structures still leaves room for improvement. Furthermore, said multilayer heat shields are prone to galvanic corrosion when brought into direct contact with steel or stainless steel components (such as the surface of a stainless steel fuel tank employed in HEV, mounting bolts, screws, or the like).

For these reasons, there is a need for heat shields which simultaneously exhibit excellent heat shielding and sound damping properties and favourable corrosion resistance, while still being light weight and conformable to complex curved shapes characteristic to vehicle components.

In addition, it remains desirable to provide a heat shield material which fulfills said requirements while being fabricable in a simple and inexpensive manner.

### SUMMARY OF THE INVENTION

The present invention solves these problems with the subject matter of the claims as defined herein. Further advantages of the present invention will be further explained in detail in the section below.

According to a first aspect of the present invention, a multilayer laminate for heat shielding applications is provided, the laminate comprising in the following order: a heat reflective layer comprising a metal or a metallic alloy; a first insulating layer composed of a material selected from a polymer-based foam, glass fibers, mineral fibers, synthetic non-woven fabric, natural non-woven fabric and combinations thereof; and a second insulating layer comprising a cellular structure.

A second aspect of the present invention relates to a heat shield comprising the multilayer laminate according to the first aspect.

A third aspect of the present application relates to the use of the multilayer laminate according to the first aspect as a heat shield in automotive, marine, aerospace, aircraft, building, construction or white good applications, preferably as a heat shield in automotive applications.

In a fourth aspect, the present invention relates to a method of producing a multilayer laminate for heat shielding, comprising the steps of: (a) stacking a heat reflective layer comprising a metal or a metallic alloy, a first insulating layer composed of a material selected from a polymer-based foam, glass fibers, synthetic non-woven fabric, natural non-woven fabric and combinations thereof, and a second insulating layer comprising a cellular structure, wherein one or more of the layers have been optionally subjected to steps of pre-heating and/or shaping; and (b) subjecting the assembled stack to a forming step to provide the multilayer laminate for heat shielding.

Preferred embodiments of the multilayer laminate according to the present invention and other aspects of the present invention are described in the following description and the claims.

### BRIEF DESCRIPTION OF THE DRAWINGS

FIG. 1 is a schematic representation of an exemplary configuration of a multilayer laminate according to the present invention.
FIGS. 2A and 2B are photographs showing the bottom (FIG. 2A) and top side (FIG. 2B) of an exemplary multilayer laminate.

### DETAILED DESCRIPTION OF THE INVENTION

For a more complete understanding of the present invention, reference is now made to the following description of the illustrative embodiments thereof:

### Multilayer Laminate

In a first embodiment, the present invention relates to a multilayer laminate comprising in the following order: a heat reflective layer comprising a metal or a metallic alloy; a first insulating layer composed of a material selected from a polymer-based foam, glass fibers, mineral fibers, synthetic non-woven fabric, natural non-woven fabric and combinations thereof; and a second insulating layer comprising a cellular structure.

The heat reflective layer may be constructed of aluminum foil or like metallic heat reflective materials, such as silver, gold, copper, alloys thereof or titanium nitride, for example. However, an aluminum foil is preferred in view of low cost expenditure. The heat reflective layer is preferably constructed with a thickness in the range of 50 µm to 1 mm, preferably from 80 to 800 µm, further preferably in the range of 100 to 200 µm, to balance flexibility and material strength. The heat reflective layer may further include embossing patterns and/or microperforations, the latter being particularly preferred to further enhance the sound absorption performance.

According to the present invention, the first insulating layer is composed of a material selected from a polymer-based foam, glass fibers, mineral fibers, synthetic non-woven fabric, natural non-woven fabric and combinations thereof.

The polymer-based foam preferably consists of open-cell foamed plastic. While not being limited thereto, the foam may be based upon expanded polymer (e.g. polyolefins, other thermoplasts, elastomers, thermoplastic elastomers, thermosets etc.). Preferred embodiments include elastomeric or thermoplastic foams, and other widespread polymer-based insulation including polyurethanes, PUR/PIR, polyesters, and phenolics, for example. Among the polymer-based foams, open-cell polyolefin-based foams are particularly preferred as they enable effective acoustic insulation. In order to provide for especially light insulation and flame retardancy, the polymer-based foam layer can also be produced from melamine-resin foamed plastic.

The nonwoven-fabric can be made from a spun or needle-punched nonwoven fabric. The fibers of the nonwoven-fabric layer are preferably synthetic fibers, more preferably a PET-based non-woven fabric. Furthermore, the nonwoven-fabric layer can also be formed from an aluminium-fiber nonwoven fabric. In preferred embodiments, the base material of the non-woven fabric comprises polypropylene (PP), polyethylene (PE), polybutylene terephthalate (PBT), polyethylene terephthalate (PET) and/or polyamide (PA), essentially in a fibrous form, with polyethylene terephthalate (PET) being preferred. Alternatively or in addition, it is also possible to employ natural fibers. As examples of natural fibers, seed fibers (e.g., cotton), fruit wall fibers (e.g., kapok), bast fibers (e.g., flax, hemp, linen, and jute), and hard fibers (e.g. cocoa or sisal) may be mentioned.

In embodiments, wherein the acoustic damping properties and the strength of the composite material is of particular importance, the non-woven material may be selected from fiber-glass reinforced or fiber-glass mesh reinforced fibrous materials. In addition, suitable conventional heat resistant inorganic fibers that may be used to prepare the first insulating layer include refractory ceramic fibers, alkaline earth silicate fibers, mineral wool fibers, leached glass silica fibers, fiberglass, glass fibers and mixtures thereof.

In addition to the non-woven fiber, the first insulating layer may further comprise inorganic or organic binder materials known in the art. While not being limited thereto, such binders may be selected from phenol-formaldehyde resins, epoxy resins, polyester resins, polyamide resins, polypropylene, polyethylene and/or ethyl/vinyl acetate copolymers, for example. Additional known additives may be included to provide desirable characteristics, such as fire or flame resistance, mold resistance, pest resistance, mechanical properties, and the like.

Also, the first insulating layer may be configured as a so-called pore composite which consists of three phases (i.e. fabric, binder and air)

Preferably, the first insulating layer has a surface density of from 80 to 1200 g/m², preferably between 300 and 600 g/m².

To balance light weight and optimized heat insulation, the first insulating layer preferably has a thickness in the range of 0.5 to 30 mm, preferably between 1 and 10 mm. In general, layer thicknesses, as referred to in the present application, are determined in accordance with ISO1923.

According to the present invention, the second insulating layer comprises a cellular structure. The term "cellular structure", as used herein, generally denotes a structure comprising unfilled or at least partly unfilled air pockets to reduce the weight of the heat shield, while the cell walls are configured to stiffen the overall structure. The presence of the second insulating layer enables improved acoustic and vibration damping while reducing the density with a simultaneous increase of the tensile and compressive strength and allows increased absorption of deformation energy. It is understood that the second insulating layer is distinct from the first insulating layer. Moreover, it is preferred that the second insulating layer preferably does not comprise a foamed material.

In particularly preferred embodiments of the second insulating layer, a cellular structure is established by implementing a honeycomb layer, a bubble structure plastic layer and/or a corrugated plastic layer. Further preferably, the second insulating layer is selected from a honeycomb layer and/or a corrugated plastic layer.

In applications, where the multilayer laminate is to be applied on stainless steel surfaces or components with the second insulating layer in direct contact therewith, it is generally preferred that the second insulating layer is polymer-based, which eliminates the danger of galvanic corrosion. Specifically preferred are polymers selected from thermoplastic materials, especially polyalkylenes (such as PE or PP, for example), polyamide (PA), PVC, PE, PBT, PET, polyphenylene sulfide (PPS), polyetherimide (PEI) and the like, as they may be easily thermoformed into complex curved and/or 3D shapes before or during lamination with the heat-reflective layer and the flexible first insulating layer.

Suitable corrugated plastic layers include, but are not limited to twin-walled or multi-walled fluted sheets, such as twin-walled fluted polypropylene, for example, also known as corriboard, which is advantageously recyclable.

A honeycomb layer is particularly preferred, as it provides for efficient heat shielding at low thicknesses and increased bending strength in the final product. The shape and configuration of the individual cells of the honeycomb core layer is not particularly limited and may include hexagonal cross sections with straight (perpendicular) walls (with respect to the surface of the honeycomb core layer), for example, while also embodiments with convex or concave walls of the individual cells are possible. While not being limited thereto, suitable honeycomb layers are described in EP 2 674 091 A1, WO 2011/082708 A1, WO 2006/053407 A1 and US 2018/0126680 A1, for example.

The thickness of the second insulating layer may be selected by the skilled artisan depending on the construction, the desired heat insulation performance and the material. Preferably, the thickness of the second insulating layer is in the range of 1 to 10 mm, preferably between 2 and 8 mm.

To further enhance the heat insulation properties, it is preferred that the second insulating layer comprises a skin layer on one or both surfaces of the layer comprising the cellular structure in order to provide closed, air-filled cells. While it is preferred that such skin layers are composed of the same material as the layer comprising the cellular structure, the material of one or both skin layers may also be different. However, from the viewpoint of preventing galvanic corrosion, it is preferred that at least the skin layer on the side opposed to the first insulating layer is polymer-based. While not being limited thereto, the thickness of such skin layers preferably ranges from 10 to 600 µm, further preferably from 20 to 400 µm, such as from 40 to 300 µm.

It is noted that the second insulating layer may have a multilayer structure. Specifically, it may be preferred that two or more layers comprising a cellular structure are comprised in the second insulating layer, such as two honeycomb layers or two corrugated layers with a different (e.g. perpendicular) striation relative to each other. However, in terms of balancing a low thickness with excellent heat insulation properties, a single-layer configuration may be preferred.

In a preferred embodiment, the multilayer laminate further comprises a first connecting layer between and in contact with the heat reflective layer and the first insulating layer and/or a second connecting layer between and in contact with the first insulating layer and the second insulating layer.

Typically, the first connecting layer and/or the second connecting layer comprise an adhesive formulation, which may be identical or different. In preferred embodiments, the first connecting layer and/or the second connecting layer are selected from a double-sided adhesive layer or a layer formed by melting a hot melt adhesive.

Hot melt adhesives, also known as hot glue or hot melt, wet a bonding surface in the molten state and restore the adhesive bond upon solidification. Suitable hot melt adhesives are known in the art and are described inter alia in EP 2 075 297 A1. As examples of hot melt adhesives, hot-melt formulations based on polymers or copolymers such as co-polyamide (co-PA), co-polyester (co-PES), low pressure polyethylene (HDPE), polyvinyl alcohol (PVA), high pressure-polyethylene (LDPE), ethylene vinyl acetate (EVA), thermoplastic polyurethane (TPU), polypropylene (PP), polycaprolactone (PCL), terpolymer, and mixtures thereof (blends) may be mentioned. The hot melt adhesives may further contain additives commonly used in the art, such as resins, plasticizers, antioxidants and crosslinking agents. In preferred embodiments, different hot melt adhesive formulations may be used for the first and the second connecting layers. For example, it may be preferred to use a hot-melt formulation based on polyalkylene (such as PE or PP) in the first connecting layer and a hot-melt formulation based on ethylene vinyl acetate (EVA) to account for the different choice of materials used in the heat reflective and the first and second insulating layers.

In embodiments, the production process may be remarkably simplified by using a double-sided adhesive tape as at least one of the first and the second connecting layers. In this case, the adhesive is preferably a pressure sensitive adhesive (PSA) selected from an acrylic adhesive, a silicone adhesive, a butyl adhesive, a natural rubber-based adhesive, a block copolymer-based adhesive. Acrylic adhesives are preferred as they impart strong adhesion at room temperature and a high degradation resistance at elevated temperatures. While supported double-sided PSA (consisting of multiple layers, including two PSA layers on two external faces and a central carrier layer of plastic and/or elastomeric and/or expanded material) can be used effectively, carrier-free adhesives, also known as transfer adhesives or transfer tapes (i.e. layers or films consisting of a bulk acrylic adhesive) are preferred. Such transfer tapes may include double-sided adhesive acrylic foams (i.e. layers or films consisting of a bulk acrylic adhesive, expanded at least in the central part of the layer or of the film itself) or non-foamed acrylic formulations, the latter being preferred when a balance between a strong adhesive bond and small laminate thickness is desired. In this respect, it is preferred that a double-sided adhesive transfer tape having a thickness in the range of 10 to 300 µm is used. In a particularly preferred embodiment, a double-sided acrylic adhesive transfer tape with a thickness in the range of 90 to 250 µm is used, which provides for excellent processability in the lamination process and favourable bonding strength.

Depending on the application, the multilayer laminate according to the present invention may provide a heat shielding function by being applied directly onto the substrate, for instance, by using an adhesive or a mechanical fixation means (e.g. by connection with clips or screws through openings in the multilayer laminate). In this context, suitable adhesive formulations (which may also include double-sided PSA or transfer tapes) may be suitably selected by the skilled artisan from heat-resistant adhesive formulations known in the art.

Alternatively, the multilayer laminate may be mounted with an air gap between at least a part of the surface of the second insulating layer (if said layer forms the outer layer). Here, it may be preferred to provide the multilayer laminate with one or more spacers on at least one edge portion of the surface of the second insulating layer opposed to the first insulating layer. Such spacers may be configured as sealing strips, which may be composed from sealing materials known in the art, including rubber materials (e.g. silicone rubber, EPDM rubber, nitrile butadiene rubber) and the like. Preferred materials include foamed sealing materials, especially preferably EPDM-based (semi-)closed foams. The spacers may be affixed to the substrate by using an adhesive thereon (e.g. a double-sided PSA or preferably a double-sided transfer tape) or by establishing a press-fit through mechanical fixation means (e.g. by connection with clips or screws through openings in the multilayer laminate that are either in the spacer portion on the edge or in another portion of the multilayer laminate).

In addition to the above, the multilayer laminate may comprise further layers. However, it is preferred that no layer except for one or more adhesive layers or the above-described spacer layer is provided between the second insulating layer and the substrate on which the laminate is mounted.

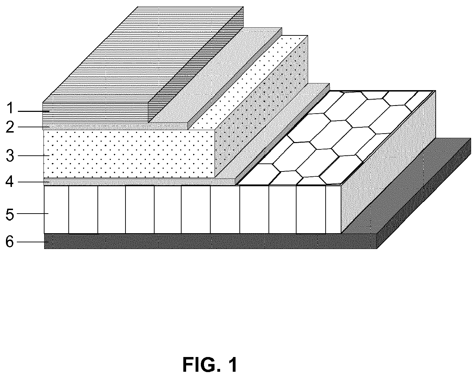

An especially preferred embodiment of a multilayer laminate according to the present invention is illustrated in Fig. 1. This exemplary laminate consists of a heat reflective layer (1); an optional first connecting layer (2); a first insulation layer (3); an optional second connecting layer (4); a second insulation layer (5), which is exemplarily depicted as honeycomb layer; as well as an optional adhesive layer (6) provided on the second insulation layer (5). Said configuration enables effective heat reflection, heat transport to the sides, heat insulation, sound absorption, and high stability at a low weight, and may be produced in a simple manner.

### Uses and Methods of Manufacture

In a second embodiment, the present invention relates to a heat shield comprising the multilayer laminate according to the first embodiment above. Said heat shield may be employed in any application, wherein heat reflection, heat transport to the sides, insulation against thermal transfer and/or sound absorption is desired.

Thus, a third embodiment of the present application relates to the use of the multilayer laminate according to the first embodiment as a heat shield in automotive, marine, aerospace, aircraft, building, construction or white good applications, preferably in automotive applications. Further preferably, the multilayer laminate of the present invention is used a heat shield for structures and components comprising steel and stainless steel surfaces, such as stainless steel tanks (in hybrid electric vehicles, for example).

In a fourth embodiment, the present invention relates to a method of producing a multilayer laminate for heat shielding, comprising the steps of: (a) stacking a heat reflective layer comprising a metal or a metallic alloy, a first insulating layer composed of a material selected from a polymer-based foam, glass fibers, synthetic non-woven fabric, natural non-woven fabric and combinations thereof, and a second insulating layer comprising a cellular structure; and (b) subjecting the assembled stack to a forming step to provide the multilayer laminate for heat shielding.

One or more of the layers have been optionally subjected to steps of pre-heating and/or shaping before any of steps (a) and (b), further preferably before step (a). For example, it may be preferred that the second insulating layer comprising a cellular structure is pre-formed (e.g. by thermoforming) to the desired shape before stacking each of the layers.

When using connecting layers (i.e. the first and/or the second connective layer), the process may be suitably adjusted to effect strong adhesion between each layer of the laminate. In dependence of the type of adhesive used, exemplary process steps may involve the application of heat and/or pressure, for example.

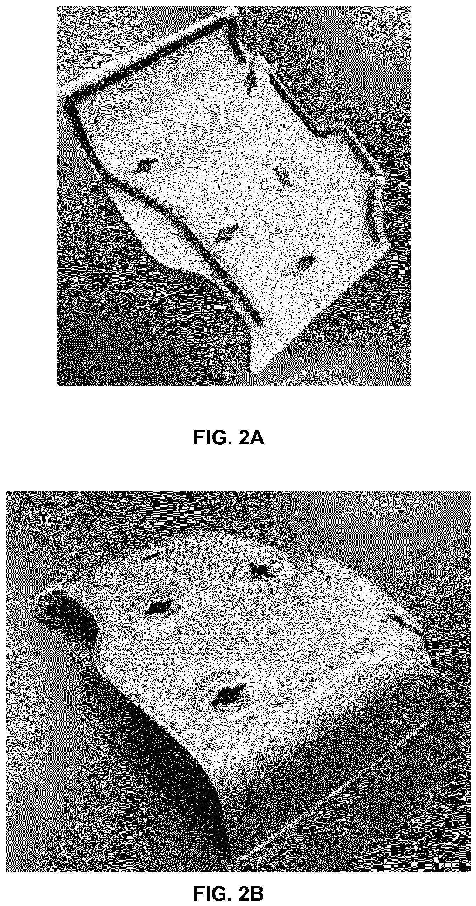

The method may include cutting steps at several stages. For example, the second insulating layer may be first subjected to a thermoforming step and optionally pre-cut to the desired size. Thereafter, a second insulating layer may be pre-cut to the desired shape. The material may then be arranged to a stack (in the given order) with the heat reflective layer, a first connective layer, the first insulating layer, a second connective layer, and second insulating layer. Corresponding to step b), the assembled stack may then be subjected to a forming step by pressing. After forming, the laminate may be cut on the edge portions and in order to provide the openings for screw mounts, for example (see Figures 2A and 2B). Optionally, as is also illustrated in Fig. 2A, one or more sealing strips may be provided as spacers on the edge portion of the surface of the second insulating layer opposed to the first insulating layer.

In a particularly preferred embodiment of the present invention, the entire stack obtained in step (a), especially preferably with the first and/or the second connective layers provided therein, is subjected to a single forming step (b) by application of heat and/or pressure. In this case, no pre-forming step is required, the edges and openings may be cut in a single step, so that the manufacturing method may be further simplified and accelerated.

It will be understood that the preferred features of the first to fourth embodiments may be freely combined in any combination, except for combinations where at least some of the features are mutually exclusive.

### EXAMPLES

Examples of multilayer laminates according to the present invention were prepared by pressing a stack consisting of, in the following order, an 150 µm aluminum sheet (as the heat reflective layer), an acrylate-based double-sided transfer tape having a thickness of 120 µm (i.e. Nitto 5025T) as the first connecting layer, a PET non-woven fleece layer (as the first insulating layer), an acrylate-based double-sided transfer tape having a thickness of 120 µm (i.e. Nitto 5025T) as the second connecting layer, and a polypropylene(PP)-based honeycomb layer (as the second insulating layer) comprising a 3.5 mm thick PP honeycomb core and 200 µm thick PP-based skin layers on each side thereof. In Example 1, a non-woven fleece layer having a thickness of 1.5 mm was chosen, while in Example 2, non-woven fleece layer had a thickness of 4 mm. Thermal conductivity tests were performed with five 200 mm x 200 mm-sized samples for each of the Examples 1 and 2. Testing specimens were conditioned at ambient conditions of 23 °C and 50% relative humidity. Testing was conducted using a LaserComp Heat Flow Meter (Model Fox 200HT) in accordance to ASTM C 518. All sample preparations and testing were conducted at ambient conditions. Upon placing the test specimens into the heat flow meter, thermal conductivity was measured at various temperatures, i.e. at 60 °C, 70 °C, 80 °C, 90°C, 100°C, 110°C, 120°C, and 130°C. The measurement results are listed in the table below:

**TABLE 1**

| | | Example 1 | Example 2 |
|---|---|---|---|
| Thermal Conductivity* [W/mK] | Temperature [°C] | | |
| | 60 | 0.066 | 0.063 |
| | 70 | 0.068 | 0.065 |
| | 80 | 0.070 | 0.067 |
| | 90 | 0.072 | 0.069 |
| | 100 | 0.074 | 0.071 |
| | 110 | 0.077 | 0.073 |
| | 120 | 0.080 | 0.075 |
| | 130 | 0.082 | 0.077 |
| Thickness* [mm] | | 5.2 | 7.0 |

| | | | |
|---|---|---|---|
| *average of five different samples per specimen | | | |

The experimental results demonstrate that the multilayer laminates according to the present invention exhibit favourably thermal conductivity and may be effectively employed as heat shielding materials. A particularly advantageous property combination is realized with Example 2, which combines especially low thermal conductivity with small material thickness.

Once given the above disclosure, many other features, modifications, and improvements will become apparent to the skilled artisan.

### REFERENCE NUMERALS

- 1:: heat reflective layer
- 2:: first connecting layer (optional)
- 3:: first insulation layer
- 4:: second connecting layer (optional)
- 5:: second insulation layer
- 6:: adhesive layer (optional)

## Claims

1. A multilayer laminate for heat shielding applications, the laminate comprising in the following order:
a heat reflective layer comprising a metal or a metallic alloy;
a first insulating layer composed of a material selected from a polymer-based foam, glass fibers, mineral fibers, synthetic non-woven fabric, natural non-woven fabric and combinations thereof; and
a second insulating layer comprising a cellular structure.

2. The multilayer laminate according to claim 1, further comprising a first connecting layer between and in contact with the heat reflective layer and the first insulating layer and/or a second connecting layer between and in contact with the first insulating layer and the second insulating layer.

3. The multilayer laminate according to claim 2, wherein the first connecting layer and/or the second connecting layer is a double-sided adhesive layer or a layer formed by melting a hot melt adhesive.

4. The multilayer laminate according to any of claims 2 or 3, first connecting layer and/or the second connecting layer is formed by a double-sided adhesive transfer tape having a thickness in the range of 10 to 300 µm, preferably in the range of 90 to 250 µm.

5. The multilayer laminate according to any of claims 1 to 4, wherein the second insulating layer is polymer-based and/or wherein the cellular structure in the second insulating layer is formed by a honeycomb layer or a corrugated plastic layer.

6. The multilayer laminate according to any of claims 1 to 5, wherein the second insulating layer comprises a honeycomb core layer and skin layers on each surface of the honeycomb core layer.

7. The multilayer laminate according to any of claims 1 to 6, wherein the first insulating layer composed of a synthetic or natural non-woven fabric, preferably a synthetic non-woven fabric, more preferably a PET-based non-woven fabric.

8. The multilayer laminate according to any of claims 1 to 7, wherein the first insulating layer has a surface density of from 80 to 1200 g/m², preferably between 300 and 600 g/m².

9. The multilayer laminate according to any of claims 1 to 8, wherein the first insulating layer has a thickness in the range of 0.5 to 30 mm, preferably between 1 and 10 mm, and/or wherein the second insulating layer has a thickness in the range of 1 to 10 mm, preferably between 2 and 8 mm.

10. The multilayer laminate according to any of claims 1 to 9, wherein the heat reflective layer has a thickness in the range of 50 µm to 1 mm, preferably in the range of 100 to 200 µm.

11. The multilayer laminate according to any of claims 1 to 9, wherein the heat reflective layer is an aluminum foil.

12. The multilayer laminate according to any of claims 1 to 11, further comprising an adhesive layer on the surface of the second insulating layer opposed to the first insulating layer and/or one or more sealing strips on at least one edge portion of the surface of the second insulating layer opposed to the first insulating layer.

13. Heat shield comprising the multilayer laminate according to any one of claims 1 to 12.

14. Use of the multilayer laminate according to any of claims 1 to 12 as a heat shield in automotive, marine, aerospace, aircraft, building, construction or white good applications, preferably as a heat shield in automotive applications.

15. Method of producing a multilayer laminate for heat shielding, comprising the steps of:
(a) stacking a heat reflective layer comprising a metal or a metallic alloy, a first insulating layer composed of a material selected from a polymer-based foam, glass fibers, synthetic non-woven fabric, natural non-woven fabric and combinations thereof, and a second insulating layer comprising a cellular structure, wherein one or more of the layers have been optionally subjected to steps of pre-heating and/or shaping; and
(b) subjecting the assembled stack to a forming step to provide the multilayer laminate for heat shielding.
